# EUROPÄISCHE PATENTSCHRIFT

(11) **EP 2 281 968 B1**
(45) Veröffentlichungstag und Bekanntmachung des Hinweises auf die Patenterteilung: **02.11.2016**
(21) Anmeldenummer: 10006379.1
(22) Anmeldetag: 19.06.2010
(51) Int. Cl.: E04D 15/04, E04D 15/06, B29L 31/10, B29C 65/00, B29C 65/48, B29C 65/14

(54) **Verfahren zum Verschweißen oder Verkleben flächiger Bauwerksabdichtungen**
Method for welding or gluing flat structural seals
Procédé de soudure ou de collage de joints de construction plats

(30) Priorität: 03.07.2009 DE 102009031856; 07.05.2010 DE 102010019688
(43) Veröffentlichungstag der Anmeldung: 09.02.2011
(73) Patentinhaber: Marzouki, Taieb, 27321 Thedinghausen (DE)
(72) Erfinder: Marzouki, Taieb, 27321 Thedinghausen (DE)
(74) Vertreter: Möller, Friedrich

(56) Entgegenhaltungen:
- EP-A2- 1 624 129
- DE-U- 6 941 382
- US-A- 4 806 194

## Beschreibung

Die Erfindung betrifft ein Verfahren zum Verschweißen flächiger Bauwerksabdichtungen gemäß dem Oberbegriff des Anspruchs 1.

Flächige Bauwerksabdichtungen werden vorwiegend für Dächer, Böden, Wände und Brücken verwendet. Dabei finden üblicherweise zu Rollen aufgerollte Abdichtungsbahnen Verwendung. Mehrere, nebeneinanderliegende Abdichtungsbahnen werden zur Bildung einer großflächigen Abdichtung verklebt oder verschweißt. Bei mehrschichtigen Dachabdichtungen werden mit Unterlagsbahnen Oberlagsbahnen verklebt oder verschweißt.

Bei bituminösen Bauwerksabdichtungen aus vorzugsweise Bitumenabdichtbahnen ist es üblich, die zu verschweißenden Flächen mit einem eine offen Flamme aufweisenden Brenner, vorzugsweise einem Gasbrenner, zu erwärmen und aufzuweichen. Die offene Flamme führt zu einer erhöhten Brandgefahr.

Aus Kunststoff bestehende Abdichtbahnen werden üblicherweise mit Heißluft verschweißt. Dadurch kommt es zu einer unkontrollierten Temperaturentwicklung, die ein gleichmäßiges Aufheizen der zu verschweißenden Flächen nicht zulässt und dadurch zu unhomogenen Verschweißungen führt.

Aus der EP 1 624 129 A2 ist ein Verschweißen von Bauwerksabdichtungen bekannt, wobei jede der zu verschweißenden Bauwerksabdichtungen durch unterschiedliche Infrarotquellen erwärmt wird.

Aus der DE 69 41 382 U und der US 4 806 194 A ist es bekannt, nur jeweils eine der zu verschweißenden Flächen mit Infrarotstrahlen zu erhitzen.

Der Erfindung liegt nun die Aufgabe zugrunde, ein Verfahren zu schaffen, womit flächige Bauwerksabdichtungen zuverlässig und gleichmäßig ohne eine Gefährdung von Personen und umweltverträglich verschweißbar sind.

Ein Verfahren zur Lösung dieser Aufgabe weist die Maßnahmen des Anspruchs 1 auf. Dadurch, dass das Verschweißen mit kurzwelligen Infrarotstrahlen erfolgt, lässt sich eine exakte Temperaturführung realisieren. Dadurch sind die zu verschweißenden Flächen gleichmäßig aufheizbar und sowohl der Kunststoff von Kunststoffabdichtungen als auch das Bitumen von Bitumenabdichtungen gleichmäßig und kontinuierlich erweichbar bzw. anschmelzbar. Das ergibt hochwertige, vollflächige und homogene Verschweißungen. Vor allem sind durch die Erfindung auch bituminöse Abdichtungen ohne eine offene Flamme verschweißbar. Mit den kurzwelligen Infrarotstrahlen sind die zu verschweißenden Flächen ohne Beeinträchtigung von Personen und ohne umweltschädliche Emissionen verschweißbar. Vor allem lassen sich kurzwellige Infrarotstrahlen erzeugende Strahler relativ dicht und damit exakt vor den zu erhitzenden und aufzuschmelzenden Flächen positionieren, wodurch die kurzwelligen Infrarotstrahlen gezielt auf die zu verschweißenden Flächen gerichtet werden können. Die miteinander vollflächig oder längs einer Überlappungsbahn zu verschweißenden Abdichtungsbahnenwerden beide an ihren zu verschweißenden Flächen aufgeheizt und erweicht bzw. angeschmolzen. Das kontinuierliche Aufheizen der zu verschweißenden Flächen führt dazu, dass diese beim Verlegen gleichmäßig in einen für das Verschweißen optimalen Zustand gebracht werden und dadurch eine homogene Verschweißung, insbesondere eine ununterbrochene Schweißnaht, entsteht.

Gemäß einer Weiterbildung des Verfahrens ist es vorgesehen, die zu verschweißende Fläche mindestens der sich auf einer Rolle befindlichen Abdichtungsbahn während des Abrollens von der Rolle kontinuierlich aufzuheizen und zu erwärmen bzw. anzuschmelzen. Dadurch kann mindestens eine zu verschweißende Fläche beim Abrollen der Abdichtungsbahn aufgeheizt werden, ohne dass dadurch ein zusätzlicher Arbeitsgang erforderlich ist.

Eine Weiterbildung sieht es vor, dass der kurzwellige Infrarotstrahler beim Abrollen der Abdichtungsbahn mit vorzugsweise gleichbleibendem Abstand vor der Rolle entlanggeführt wird. Dadurch kann mindestens die zu verschweißende Fläche der von der Rolle abgerollten Abdichtungsbahn während des Abrollens der Abdichtungsbahn unmittelbar vor dem Verschweißen aufgeheizt werden. Das Aufheizen und Verschweißen der Abdichtungsbahn erfolgt so quasi in einem Arbeitsgang beim Abrollen der Abdichtungsbahn von der Rolle.

Wenn beim Abrollen der Abdichtungsbahn die zu verschweißende Fläche derselben aufgeheizt wird, wird auch die andere zu verschweißende Fläche, auf der die Abdichtbahn abgerollt wird, aufgeheizt. Dabei kann es vorgesehen sein, die Fläche der aufgerollten Abdichtungsbahn mehr oder weniger aufzuheizen als die Fläche, womit die Abdichtungsbahn vollflächig oder streifenförmig durch eine Überlappungsnaht verschweißt wird. Insbesondere dann ist es sinnvoll, die zu verschweißenden Flächen unterschiedlich stark aufzuheizen, wenn verschiedene Materialien miteinander verschweißt werden. Dadurch werden optimale Voraussetzungen zum Herstellen einer hochqualitativen Bauwerksabdichtung geschaffen.

Nach einer bevorzugten Weiterbildung des Verfahrens ist es vorgesehen, die maximale Solltemperatur, auf die die zu verschweißenden Flächen aufgeheizt werden, während des Aufheizens vorzugsweise kontinuierlich zu überwachen. Dadurch wird sichergestellt, dass die zu verschweißenden Flächen auf die vorgesehene Solltemperatur aufgeheizt werden, diese aber nicht überschritten wird. Es wird vielmehr die Solltemperatur oder ein Solltemperaturbereich stets eingehalten, was durch die Verwendung von einfach und exakt in der Heizleistung regelbaren Infrarotstrahlern begünstigt wird.

Eine weitere bevorzugte Ausgestaltung des Verfahrens sieht es vor, beim Aufheizen der zu verschweißenden Flächen die Oberflächentemperatur mindestens einer der aufzuheizenden Flächen insbesondere kontinuierlich zu ermitteln. Das kann beispielsweise mit einem Strahlungspyrometer erfolgen. Durch einen Vergleich der gemessenen, momentanen Temperatur der Oberfläche mindestens einer der zu verschweißenden Flächen mit der maximalen Solltemperatur kann eine zuverlässige Temperaturregelung erfolgen. Dadurch ist sichergestellt, dass die zu verschweißenden Flächen nur so weit aufgeheizt werden wie erforderlich. Ein zu Verbrennungen führendes Aufheizen wird so zuverlässig vermieden.

Mit den Infrarotstrahlern können bei zu verschweißenden Bauwerksabdichtungen die zu verschweißenden Flächen gezielt vor allem gleichmäßig über ihre ganze Breite lückenlos aufgeheizt werden. Außerdem ist die Heizenergie von Infrarotstrahlern insbesondere im kurzwelligen Bereich exakt einstellbar, so dass die zu verschweißenden Flächen von dem mindestens einen Infrarotstrahler eine exakte Temperatur aufgeheizt werden können, wobei diese Temperatur gleichmäßig über die gesamte zu verschweißende Fläche erzielbar ist. Dadurch kommt ein optimales Aufheizen der zu verschweißenden Flächen zustande, wodurch ideale Voraussetzungen für ein gleichmäßiges Verschweißen der zu verbindenden Flächen von Bauwerksabdichtungen, insbesondere Abdichtungsbahnen, geschaffen werden.

Bevorzugte Ausführungsbeispiele der Erfindung werden nachfolgend anhand der Zeichnung näher erläutert. In dieser zeigen:
- Fig. 1: eine Draufsicht auf eine teilweise verlegte Dachabdeckung, und
- Fig. 2: eine schematische Seitenansicht einer Vorrichtung zum Verbinden von Dachabdichtungsbahnen.

Die Figuren zeigen die Erfindung im Zusammenhang mit einer Dachabdichtung. Die Erfindung ist hierauf aber nicht beschränkt. Sie eignet sich für jegliche Bauwerksabdichtungen, beispielsweise auch für Brückenabdichtungen, Boden- oder Wandabdichtungen und Anschlüsse.

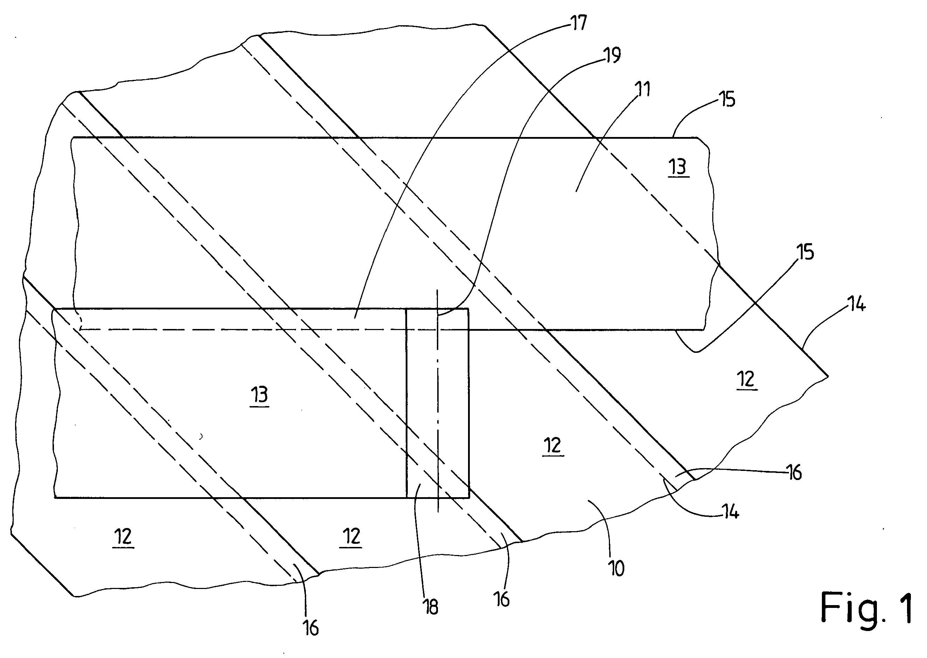

Die in der Fig. 1 gezeigte Dachabdichtung ist zweischichtig ausgebildet. Dazu ist auf einer nicht dargestellten Dämmung eine Unterlagsschicht 10 und darauf eine Oberlagsschicht 11 aufgebracht. Sowohl die Unterlagsschicht 10 als auch die Oberlagsschicht 11 sind aus nebeneinanderliegenden Dachabdichtungsbahnen, und zwar Unterlagsbahnen 12 und Oberlagsbahnen 13, gebildet. Die Unterlagsbahnen 12 und die Oberlagsbahnen 13 können unterschiedlich gerichtet übereinander angeordnet sein. Im gezeigten Ausführungsbeispiel sind die Oberlagsbahnen 13 so über den Unterlagsbahnen 12 angeordnet, dass die Längsränder 14 der Unterlagsbahnen 12 und die Längsränder 15 der Oberlagsbahnen 13 sich unter einem Winkel, der beispielsweise etwa 45° beträgt, schneiden.

Sowohl die Unterlagsbahnen 12 als auch die Oberlagsbahnen 13 sind mit geringer seitlicher Überlappung verlegt und im Bereich der Überlappungen durch Überlappungsnähte 16 bzw. 17 miteinander verschweißt. Darüber hinaus sind die Oberlagsbahnen 13 auf den Unterlagsbahnen 12 vollflächig verschweißt, so dass eine ganzflächige Schweißverbindung der Oberlagsschicht 11 mit der Unterlagsschicht 10 entsteht.

Das Verschweißen der nebeneinanderliegenden Unterlagsbahnen 12 in den Bereichen der Überlappungsnähten 16 und der nebeneinanderliegenden Oberlagsbahnen 13 im Bereich der Überlappungsnähte 17 und das vollflächige Verschweißen der Oberlagsbahnen 13 auf den Unterlagsbahnen 12 erfolgt erfindungsgemäß mit Infrarotstrahlen, und zwar bevorzugt kurzwelligen Infrarotstrahlen, die von mindestens einem länglichen Infrarotstrahler erzeugt werden, der elektrisch betrieben wird. Vom jeweiligen Infrarotstrahler werden beide zu verschweißenden Flächen oder gegebenenfalls auch nur eine der zu verschweißenden Flächen auf eine bestimmte Temperatur aufgeheizt und dadurch erweicht bzw. angeschmolzen.

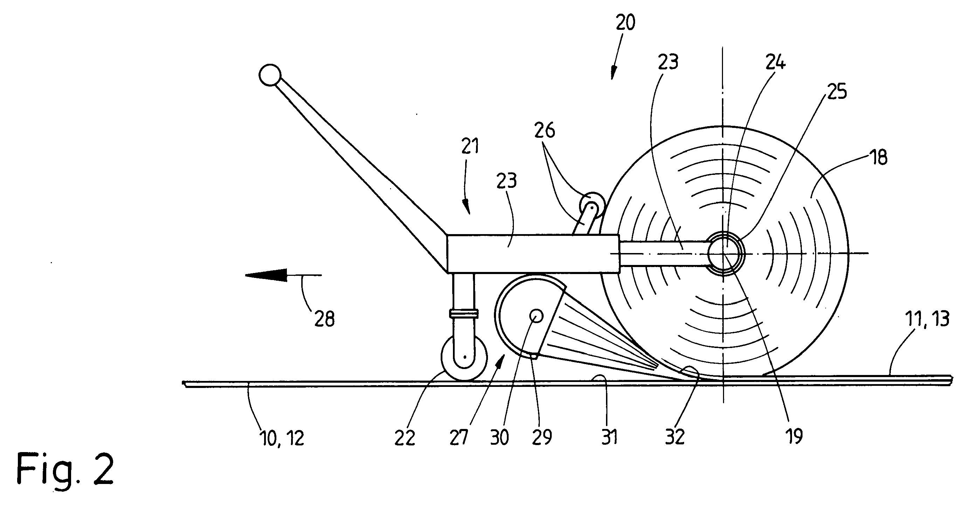

Die Fig. 2 zeigt schematisch eine Vorrichtung zum Verschweißen der Unterlagsbahnen 12 und der Oberlagsbahnen 13 mittels eines Infrarotstrahlers 18 zum Aufheizen beider zu verschweißender Flächen. Im gezeigten Ausführungsbeispiel wird mit der Vorrichtung eine Oberlagsbahn 13 vollflächig mit den zuvor verlegten Unterlagsbahnen 12 der Unterlagsschicht 10 verschweißt und dabei gleichzeitig die Überlappungsnaht 17 zur Verbindung nebeneinanderliegender Oberlagsbahnen 13 hergestellt. Dabei wird die zu verschweißende Oberlagsbahn 13 von einer Rolle 18 abgewickelt. Die Rolle 18 wird dabei um ihre Längsmittelachse 19 gedreht. Die Längsmittelachse 19 der Rolle 18 bildet dabei gleichzeitig eine Abwickelachse.

Die Vorrichtung weist eine im gezeigten Ausführungsbeispiel als Abrollwagen 20 ausgebildete Abrolleinrichtung auf. Der Abrollwagen 20 verfügt über einen Rahmen 21 mit frei drehbaren Rädern 22, auf denen der Abrollwagen 20 handbetätigt und handgeführt auf einem Untergrund entlangfahrbar, insbesondere schiebbar, ist. Der Abrollwagen 20 kann aber auch einen Fahrantrieb aufweisen. Dann ist der Abrollwagen 20 selbstfahrend, wobei er von Hand nur geführt zu werden braucht. Im gezeigten Ausführungsbeispiel ist der Abrollwagen 20 mit den Rädern 22 in Längsrichtung der auf der Unterlagsschicht 10 zu verlegenden Oberlagsbahn 13 verfahrbar.

Der Abrollwagen 20 verfügt an gegenüberliegenden Enden des Rahmens 21 über jeweils einen Arm 23. Am freien Ende jedes Arms 23 ist ein quergerichteter Dorn 24 angeordnet. Die Dorne 24 greifen von gegenüberliegenden Seiten in eine Hohlachse 25 jeder Rolle 18 der Oberlagsbahn 13 ein. Die Hohlachse 25, die gegebenenfalls von einem Rohr, auf dem die Oberlagsbahn 13 aufgewickelt ist, gebildet sein kann, liegt auf der Längsmittelachse 19 der Rolle 18, die damit eine Drehachse der Abrollachse bildet, um die die Rolle 18 auf den ebenfalls auf der Längsmittelachse 19 liegenden Dornen 24 frei drehbar ist. Dadurch ist die Rolle 18 durch Entlangbewegen des Abrollwagens 20 in der sich in Längsrichtung der Oberlagsbahn 13 erstreckenden Verlegerichtung 28 von der Rolle 18 abwickelbar.

Der hier gezeigte Abrollwagen 20 verfügt über vorzugsweise mehrere am Rahmen 21 befestigte Abstandshalter 26. Diese stützen sich außen an der Rolle 18 ab, vorzugsweise mit einem frei drehbaren Rad oder einer Walze. Die Abstandshalter 26 können dazu dienen, die gegebenenfalls teleskopisch ausgebildeten Arme 23 zu verkürzen, wenn durch weiteres Abrollen der Oberlagsbahn 13 von der Rolle 18 sich der Außendurchmesser derselben verringert. Auf diese Weise liegt die Rolle 18 auch dann, wenn sich ihr Durchmesser verändert, stets an den Abstandshaltern 26 an.

Am Abrollwagen 20 ist außerdem mindestens ein länglicher Infrarotstrahler 27 angeordnet. Dabei kann es sich um einen einzigen sich über die gesamte Breite der Rolle 18 mit der Oberlagsbahn 13 erstreckenden Infrarotstrahler 27 handeln. Es ist aber auch denkbar, mehrere auf einer gemeinsamen quer zur Verlegerichtung 28 verlaufenden Achse aufeinanderfolgende, also in Reihe angeordnete, kürzere Infrarotstrahler 27 vorzusehen. Außerdem können auch mehrere Infrarotstrahler 27 parallel, also übereinander und/oder hintereinander angeordnet sein, wo dann auch mehrere Infrarotstrahler 27 nebeneinander angeordnet sein können. In diesem Falle sind mehrere Infrarotstrahler 27 sowohl in Reihe als auch parallel angeordnet zu einem Raster mehrerer Infrarotstrahler 27. Mindestens die äußeren Infrarotstrahler 27 verfügen dann über eine Breite, die der Breite der Überlappungsnaht 16 bzw. 17 entspricht, so dass mit der gleichen Vorrichtung nicht nur eine vollflächige Verklebung der Oberlagsbahn 13 auf der Unterlagsbahn 12 erfolgen kann, sondern auch eine Verschweißung benachbarter Unterlagsbahnen 12 bzw. Oberlagsbahnen 13 im Bereich der jeweiligen Überlappungsnaht 16 und 17, wozu dann nur ein äußerer Infrarotstrahler 27 betrieben wird.

Der Infrarotstrahler 27 verfügt über einen Reflektor 29, dessen Querschnitt so ausgebildet ist, dass der Reflektor 29 Infrarotstrahlen bündelt oder fokussiert und sie auf beide zu verschweißenden Flächen richtet, nämlich im gezeigten Ausführungsbeispiel die Oberseite der Unterlagsschicht 10 und die auf dieser aufzuschweißenden Unterseite der Oberlagsbahn 13. Dazu ist im gezeigten Ausführungsbeispiel der Reflektor 29 etwa halbzylindrisch ausgebildet. Die Innenfläche des Reflektors 29 ist so ausgebildet, dass sie die Reflexion der Infrarotstrahlen begünstigt. Dazu ist beispielsweise die Innenseite des Reflektors 28 mit einer gold- oder silberfarbenen Beschichtung versehen.

Im Mittelpunkt des Reflektors 29 ist eine längliche Heizspirale 30 des Infrarotstrahlers 27 angeordnet, die sich durchgehend über die ganze Länge des Infrarotstrahlers 27 erstreckt. Es ist auch denkbar, dass in der Nähe des Mittelpunkts des Reflektors 29 sich mehrere parallele und dicht beieinanderliegende Heizspiralen 30 befinden. Die Heizspiralen 30 werden elektrische betrieben, indem sie nach Art einer Widerstandsheizung vom durch die Heizspiralen 30 fließenden Strom zum Glühen gebracht und dabei Infrarotstrahlen erzeugen, die vom Reflektor 29 auf die zu verschweißenden Flächen gerichtet werden. Von der mindestens einen über die gesamte Länge des Infrarotstrahlers 27 durchgehenden Heizspirale 30 wird eine über die gesamte Breite der Oberlagsbahn 13 durchgehende Linie oder ein schmales Band mit Infrarotstrahlen gebildet, die die Oberlagsbahn 13 und die Unterlagsbahn 12 über die ganze Breite durchgehend und gleichmäßig aufheizen.

Am Abrollwagen 20 kann noch mindestens ein in der Fig. 2 nicht gezeigter Temperatursensor angeordnet sein, der die Oberflächentemperatur mindestens einer der vom Infrarotstrahler 27 aufgeheizten zu verschweißenden Flächen, nämlich den Schweißflächen 31 und 32 in der Fig. 2, ermittelt. Hierbei kann es sich beispielsweise um ein Strahlungspyrometer handeln.

Es sind andere Vorrichtungen denkbar, die beispielsweise nur zur Herstellung der Überlappungsnähte 16 bzw. 17 dienen. Dann weist der Abrollwagen 20 nur einen recht kurzen bzw. schmalen Infrarotstrahler 27 auf, der sich nur über den Bereich der relativ schmalen Überlappungsnaht 16 oder 17 erstreckt. Gegebenenfalls kann der Abrollwagen 20 über zwei kurze Infrarotstrahler 27 an die gegenüberliegenden Enden desselben verfügen, wodurch Überlappungsnähte 16 und 17 an beliebigen Enden der Rolle 18 der Oberlagsbahn 13 oder einer anderen Abdichtungsbahn herstellbar sind.

Zur Herstellung von Anschlüssen ist eine kleine Vorrichtung denkbar, die nicht als Abrollwagen 20 ausgebildet ist. Es handelt sich hierbei um ein Handgerät mit nur mindestens einem verhältnismäßig kurzen Infrarotstrahler. Ein Rahmen 21 mit Dornen 24 zum Halten der abzuwickelnden Rolle 18 fehlt bei diesem Handgerät. Das Handgerät braucht keinen Rahmen 21 zum Abwickeln einer Rolle 18 aufzuweisen, weil zur Bildung von Anschlüssen üblicherweise nur schmale Dichtstreifen verwendet werden. Dieses Handgerät verfügt auch über keine Räder 22, weil es wegen des nur recht kurzen Infrarotstrahlers recht leicht ist und es sich dadurch gut von der Hand führen lässt. Nachfolgend wird das erfindungsgemäße Verfahren anhand der Fig. 1 und 2 näher erläutert:

In den Figuren ist die vollflächige Verklebung einer Oberlagsschicht 11 aus nebeneinander mit Überlappung der Längsränder 15 abgerollten Oberlagsbahnen 13 mit einer Unterlagsschicht 10 aus nebeneinanderliegenden Unterlagsbahnen 12 dargestellt. Die Oberseite der Unterlagsschicht 10 wird vollflächig mit der Unterseite der die Oberlagsschicht 11 bildenden nebeneinanderliegenden Oberlagsbahnen 13 verschweißt. Dabei werden die zu verschweißenden Flächen, nämlich die Schweißflächen 31 der Unterlagsbahn 12 und die Schweißflächen 32 der Oberlagsbahn 13, erfindungsgemäß durch mindestens einen Infrarotstrahler 27 vollflächig, nämlich durchgehend über die gesamte Breite der Oberlagsbahn 13, erhitzt und dadurch aufgeweicht bzw. angeschmolzen und anschließend die angeschmolzenen Schweißflächen 31 und 32 miteinander verschweißt. Das Aufheizen der Schweißflächen 31 und 32 durch den mindestens einen Infrarotstrahler 27 und das Verbinden der auf diese Weise angeschmolzenen Schweißflächen 31 und 32 erfolgt kontinuierlich während des Abrollens der auf der Rolle 18 aufgerollten Oberlagsbahn 13 auf der aus den Unterlagsbahnen 12 gebildeten Unterlagsschicht 10.

Der mindestens eine elektrisch betriebene Infrarotstrahler 27 erzeugt kurzwellige Infrarotstrahlen, die vom Reflektor 29 gebündelt bzw. fokussiert auf die Schweißflächen 31 und 32 gerichtet werden, und zwar kurz vor dem Ablegen der Unterseite der abzurollenden Oberlagsbahn 13 auf der Oberseite der Unterlagsschicht 10. Bei der vollflächigen Verklebung der Oberlagsschicht 11 mit der Unterlagsschicht 10 wird die Oberlagsbahn 13 über die gesamte Breite durch von der mindestens einen über die gesamte Breite der Oberlagsbahn 13 sich erstreckende, längliche Heizspirale 30 erzeugte Infrarotstrahlen aufgeheizt und dadurch erweicht bzw. angeschmolzen. Durch den Abrollwagen 20 wird der mindestens eine Infrarotstrahler 27 exakt ausgerichtet, so dass er gezielt die Schweißflächen 31 und 32 durch Infrarotstrahlen erhitzt.

Dadurch, dass der Abrollwagen 20 mit seinen Dornen 24 die Rolle 18 in der Hohlachse 25 hält, wird mit der Fortbewegung des Abrollwagens 20 in Verlegerichtung 28 die Rolle 18 abgewickelt und dabei die Oberlagsbahn 13 auf der Unterlagsschicht 10 verlegt. Beim Abwickeln der Oberlagsbahn 13 kommen die von den Infrarotstrahlen aufgeheizten und erweichten Schweißflächen 31 und 32 der Oberlagsbahn 13 der Unterlagsschicht 10 vollflächig miteinander in Kontakt, wodurch ein ununterbrochenes, vollflächiges und homogenes Verschweißen der Oberlagsbahn 13 mit der Unterlagsschicht 10 erfolgt.

Die Abstandshalter 26 und Abrollwagen 20 sorgen dafür, dass der Abstand der Rolle 18 vom mindestens einen Infrarotstrahler 27 stets der gleiche bleibt. Weil sich aber der Durchmesser der Rolle 18 während des Abrollens der Oberlagsbahn 13 verringert, kann bei einer bevorzugten Ausgestaltung des Verfahrens der Abstand gleich gehalten werden, indem die die Dorne 24 tragenden Arme 23 des Abrollwagens 20 stets soweit verkürzt werden, dass die Rolle 18 an den Abstandshaltern 26 anliegt. Der Abrollwagen 20 mit der daran angehängten Rolle 18 der Oberlagsbahn 13 wird von Hand in Verlegerichtung 28 fortbewegt. Zu diesem Zweck ist der Abrollwagen 20 mit den Rädern 22 auf der Unterlagsschicht 10 entlangfahrbar.

Der Abrollwagen 20 kann auch Führungen aufweisen, die dazu dienen, die Oberlagsbahn 13 immer parallel zu den bereits verlegten Oberlagsbahnen 13 abzurollen, so dass die Breite der Überlappungsnaht 17 zwischen mit Überlappung nebeneinander verlegten Oberlagsbahnen 13 stets die gleiche Breite aufweist. Im Bereich dieser Überlappungsnaht 17 sind die nebeneinanderliegenden Oberlagsbahnen 13 ebenfalls verschweißt. Dieses Verschweißen erfolgt gleichzeitig beim vollflächigen Verschweißen der Oberlagsbahnen 13 mit der Unterlagsschicht 10.

Denkbar ist es auch, den Rollwagen 20 mit mindestens einem nicht gezeigten Temperatursensor auszustatten. Vorzugsweise misst der Temperatursensor die Oberflächentemperatur mindestens einer der Schweißflächen 31 und 32. Dies kann beispielsweise durch ein Strahlungspyrometer geschehen. Die gemessene Oberflächentemperatur wird entweder manuell vom Bediener des Abrollwagens 20 oder automatisch durch eine elektronische Steuerung bzw. Regelung mit der zum Verschweißen vorgesehenen Solltemperatur verglichen. Je nachdem, ob die Solltemperatur über- oder unterschritten wird, erfolgt entweder eine Anpassung der Heizleistung des mindestens einen Infrarotstrahlers 27 und/oder eine Veränderung der Geschwindigkeit, womit der Abrollwagen 20 mit der Rolle 18 der Oberlagsbahnen 13 in Verlegerichtung 28 weiterbewegt wird. Wird die Einhaltung der Solltemperatur zum Verschweißen der Oberlagsbahn 13 mit der Unterlagsschicht 10 durch eine Steuerung oder Regelung konstant gehalten, ist es sinnvoll, den Abrollwagen 20 mit einem Antrieb zu versehen, so dass von der Steuerung auf die Geschwindigkeit des selbstfahrenden Abrollwagens 20 Einfluss genommen werden kann.

Auf die vorstehend beschriebene Weise werden mit Infrarotstrahlen auch die Schweißflächen zur Bildung der Überlappungsnähte 16 und 17 zwischen benachbarten Unterlagsbahnen 12 und Oberlagsbahnen 13 zum Verschweißen der doppellagigen Unterlagsbahn 12 bzw. Oberlagsbahn 13 im Bereich der jeweiligen Überlappungsnaht 16 bzw. 17 aufgeheizt und dadurch angeschmolzen. In diesem Falle braucht der Abrollwagen 20 aber nur einen schmalen Infrarotstrahler aufzuweisen, der sich nur quer über die Breite der Überlappungsnaht 16 oder 17 erstreckt.

Die Herstellung von Anschlüssen, vorzugsweise Bauwerks- bzw. Dachanschlüsse, erfolgt gänzlich manuell. Jedoch werden die Schweißflächen der zu verbindenden Abdichtungsstreifen auch hier durch Infrarotstrahlen von mindestens einem Infrarotstrahler erhitzt und dadurch vor dem Verschweißen erweicht bzw. aufgeschmolzen.

Das erfindungsgemäße Verfahren eignet sich nicht nur zum Verschweißen von Oberlagsbahnen 13 auf Unterlagsbahnen 12. Das Verfahren kann beispielsweise bei Bauwerksabdichtungen, insbesondere Brückenabdichtungen, auch verwendet werden, um Abdichtbahnen auf einem entsprechend vorbereiteten schweißfähigen Untergrund zu verlegen und zumindest im Bereich von Überlappungsnähten zu verschweißen.

Die Erfindung eignet sich im Übrigen zum Aufheizen der zu verschweißenden Flächen von Abdichtbahnen aus verschiedenen Materialien, und zwar sowohl bituminösen Abdichtbahnen als auch Kunststoffabdichtbahnen.

Die Bauwerksabdichtungen wie vorzugsweise rollbare Abdichtungsbahnen können auch verklebt sein. Beispielsweise können Oberlagsbahnen 13 und Unterlagsbahnen 12 nach der in der Fig. 1 gezeigten Art durch insbesondere Kaltverkleben verbunden sein.

Zum Verkleben der Oberlagsbahnen 13 mit den Unterlagsbahnen 12 können sowohl die Oberseiten der Unterlagsbahnen 12 als auch die Unterseiten der Oberlagsbahnen 13 mit Kleber, insbesondere Kaltselbstkleber, versehen sein. Es können dazu sowohl die Oberseiten der Unterlagsbahnen 12 als auch die Unterseiten der Oberlagsbahnen 13 mit einer vollflächigen Kleberschicht, insbesondere Kaltselbstkleberschicht, versehen sein. Denkbar ist es aber auch, insbesondere bei Dachsanierungen, dass nur die Unterseiten der Oberlagsbahnen 13 eine Kleberschicht, insbesondere Kaltselbstklebeschicht, aufweisen, nicht aber die Oberseiten der Unterlagsbahnen 12. Es ist auch denkbar, dass die Oberseiten der Unterlagsbahnen 12 und/oder die Unterseiten der Oberlagsbahnen 13 keine vollflächigen Kleberschichten, insbesondere Kaltselbstkleberschichten, aufweisen, sondern nur bereichsweise mit Kleber versehen sind. Beispielsweise können die Oberseiten der Unterlagsbahnen 12 und/oder die Unterseiten der Oberlagsbahnen 13 nur bereichsweise, beispielsweise durch Streifen oder Punkte beliebiger Flächen mit Kleber, insbesondere Kaltselbstkleber, versehen sein. Die Abmessungen der Streifen bzw. Muster können beliebig sein.

Für die nachfolgende Beschreibung wird davon ausgegangen, dass sowohl die Oberseiten der Unterlagsbahnen 12 als auch die Unterseiten der Oberlagsbahnen 13 vollflächig mit einer Kaltselbstkleberschicht versehen sind. Die Oberlagsbahnen 13 und die Unterlagsbahnen 12 werden dann an beiden zueinandergerichteten Flächen kalt miteinander verklebt.

Damit die mit Kaltselbstkleber beschichteten Unterlagsbahnen 12 und Oberlagsbahnen 13 aufrollbar sind, sind die Kaltselbstkleberschichten vollflächig abgedeckt von in den Figuren nicht gezeigten Schutzfolien. Bei den Schutzfolien handelt es sich um Kunststofffolien, vorzugsweise Polyethylen- oder Polypropylenfolien. Die Schutzfolien verfügen nur über eine verhältnismäßig geringe Dicke von weniger als 20 µm, insbesondere 5 µm bis 10 µm. Bevorzugt beträgt die Dicke der Schutzfolien lediglich 7 µm bis 8 µm.

Die nicht silikonisierten Schutzfolien werden von mindestens einem Infrarotstrahler vor dem Zusammenkleben der Oberlagsbahnen 13 mit den Unterlagsbahnen 12 vorzugsweise kontinuierlich thermisch entfernt. Dazu werden die Schutzfolien vom Infrarotstrahler so weit erhitzt, dass sie wegschmelzen und dabei die Kaltselbstkleberschichten zumindest größtenteils freilegen. Da die Infrarotstrahler nur die sehr dünnen Schutzfolien wegschmelzen müssen, können sie über eine geringere Heizleistung verfügen als die Infrarotstrahler 27 zum Verschweißen der Oberlagsbahnen 13 mit den Unterlagsbahnen 12. Als Infrarotstrahler zum Wegschmelzen der Schutzfolien kommen bevorzugt auch kurzwellige Infrarotstrahler in Betracht.

Die von den Infrarotstrahlern zum Wegschmelzen der Schutzfolie erzeugte Wärme führt auch zu einem Erwärmen mindestens außenliegender Teilbereiche der Kaltselbstkleberschichten unter den Oberlagsbahnen 13 und auf den Unterlagsbahnen 12. Das führt zu einer Aktivierung der Kaltselbstkleberschichten und einer daraus resultierenden wirksameren Kaltverklebung der Oberlagsbahnen 13 auf den Unterlagsbahnen 12. Das gilt insbesondere für niedrige Temperaturen. Durch das Anwärmen zumindest der zu verklebenden Oberflächen der Kaltselbstkleberschichten beim Entfernen der Schutzfolien von den Kaltselbstkleberschichten können die Oberlagsbahnen 13 mit den Unterlagsbahnen 12 bei niedrigeren Temperaturen mit Kaltselbstklebern verklebt werden als das bei der konventionellen Kaltverklebung von Oberlagsbahnen 13 mit Unterlagsbahnen 12 möglich ist.

Das Entfernen der Schutzfolien durch mindestens einen Infrarotstrahler von den Klebeflächen der Kaltselbstkleberschichten kann beispielsweise mit in der Fig. 2 gezeigten Vorrichtung erfolgen. Diese verfügt über eine oder mehrere Infrarotstrahler 27, die am Rahmen 21 des Abrollwagens 20 angeordnet sind. Der Abrollwagen 20 nimmt eine Rolle der Oberlagsbahn 13 auf. Diese wird mit dem handgeführten und geschobenen oder selbstfahrenden Abrollwagen 20 auf der bereits verlegten Unterlagsbahn 12 abgerollt, und zwar vorzugsweise so, wie es in der Fig. 1 dargestellt und im Zusammenhang mit dieser Figur beschrieben ist.

Beim unter Zuhilfenahme des Abrollwagens 20 erfolgenden Abrollen der Oberlagsbahn 13 auf der schon verlegten Unterlagsbahn 12 befindet sich auf der Oberseite der Unterlagsbahn 12 noch die in der Fig. 2 nicht gezeigte Schutzfolie. Auch auf der mit der Unterlagsbahn 12 zu verklebenden Unterseite der Oberlagsbahn 13 befindet sich beim Abrollen der Oberlagsbahn 13 noch die Schutzfolie. Beim hier gezeigten Ausführungsbeispiel befinden sich auf den in der Fig. 2 gezeigten Schweißflächen 31 und 32 des ersten Ausführungsbeispiels somit die Schutzfolien.

Genauso wie die Schweißflächen 31 und 32 gemäß dem ersten Ausführungsbeispiel der Erfindung werden die Schutzfolien vom Infrarotstrahler 27 erwärmt. Ein Heizkegel des Infrarotstrahlers 27 ist dazu in einen beim Abrollen der Oberlagsbahn 13 auf der Unterlagsbahn 12 entstehenden Spalt zwischen den beiden gerichtet. Dadurch heizt der Infrarotstrahler 27 gleichzeitig beide Schutzfolien an der Unterseite der Oberlagsbahn 13 und der Oberseite der Unterlagsbahn 12 auf. Die Schutzfolien werden vom Infrarotstrahler 27 so sehr erhitzt, dass sie geschmolzen werden. Hierbei werden die Schutzfolien thermisch von den zu verbindenden Kaltselbstkleberflächen auf der Oberseite der Unterlagsbahn 12 und der Unterseite der Oberlagsbahn 13 entfernt. Man kann hier von einem Wegschmelzen sprechen, wobei die Schutzfolien die zu verklebenden Flächen der Kaltselbstkleberschichten der Unterlagsbahnen 12 und der Oberlagsbahnen 13 freigeben, indem sie von den Flächen abschmelzen. Es verbleiben nur zusammengeschmolzene, kompakte Partikel von den Schutzfolien übrig, die - wenn überhaupt - leicht entsorgbar sind, weil sie nur über ein sehr geringes Volumen verfügen.

Beim Schmelzen der Schutzfolien kommt es zu einem mindestens teilweisen Anwärmen der Kaltselbstkleberschichten. Zumindest ihre zum Verkleben der Unterlagsbahn 12 mit der Oberlagsbahn 13 in Kontakt kommenden Außenflächen werden dabei vorgewärmt und dadurch die Selbstklebeeigenschaften der Kaltselbstkleberschichten verbessert. Insbesondere ist so ein wirksameres Verkleben der Oberlagsbahn 13 mit der Unterlagsbahn 12 bei niedrigeren Temperaturen gewährleistet. Das Verkleben kann nach dem erfindungsgemäßen Verfahren auch bei niedrigeren Temperaturen stattfinden als bei der bisherigen konventionellen Kaltverklebung von Bauwerksabdichtungen.

Der mindestens eine Infrarotstrahler 27 weist eine Heizenergie auf, die ausreicht, um die Schutzfolien von der Unterlagsbahn 12 und der Oberlagsbahn 13 auf- und wegzuschmelzen, wobei zwangsläufig die Kaltselbstkleberschichten mindestens außenseitig angewärmt bzw. erhitzt werden.

Wie vorstehend beschrieben wird auch dann verfahren, wenn die zu verklebenden Seiten der Unterlagsbahn 12 und der Oberlagsbahn 13 nur bereichsweise mit Kaltselbstkleber versehen sind, nämlich Kaltselbstkleberstreifen oder Kaltselbstkleberpunkte aufweisen. Die Schutzfolien können auch dann durchgehend über die gesamten zur Verfügung stehenden Flächen der Unterlagsbahn 12 und der Oberlagsbahn 13 verlaufen, aber auch nur in den Bereichen des Kaltselbstklebers.

Es ist auch der Fall denkbar, dass nur eine der zu verbindenden Dachbahnen ganz oder teilweise mit Kaltselbstkleber versehen ist. Insbesondere bei der Dachsanierung, wo auf die vorhandene Unterlagsbahn 12 eine neue Oberlagsbahn 13 aufgebracht wird, verfügt nur die Unterseite der Oberlagsbahn 13 über Kaltselbstkleber, der von einer Schutzfolie abgedeckt ist. Dann braucht nur diese Schutzfolie vom mindestens einen Infrarotstrahler 27 thermisch entfernt zu werden. Dazu kann auch die in der Fig. 2 gezeigte Vorrichtung verwendet werden, wobei der mindestens eine Infrarotstrahler 27 nicht nur die Schutzfolie auf der Unterseite der Oberlagsbahn 13 wegschmilzt, sondern auch die Oberseite der Unterlagsbahn 12 ohne eine Schutzfolie und Kaltselbstkleber angewärmt wird. Das begünstigt auch die Kaltverklebung der Oberlagsbahn 13 auf der Unterlagsbahn 12. Es ist aber auch denkbar, in diesem Fall den Infrarotstrahler 27 am Abrollwagen 20 so zu positionieren, dass dieses nur.auf die Schutzfolie unter der Oberlagsbahn 13 gerichtet ist, aber nicht auf die Oberseite 13 der Unterlagsbahn 12. Dann wird vom Infrarotstrahler 27 nur die Schutzfolie unter der Oberlagsbahn 13 weggeschmolzen und die Kaltselbstkleberschicht unter der Oberlagsbahn 13 aufgewärmt, nicht aber die Oberseite der Unterlagsbahn 12.

Das zuvor beschriebene Verfahren zum Verlegen insbesondere kaltselbstklebender Abdichtungsbahnen, vor allem Oberlagsbahnen 13 und Unterlagsbahnen 12, eignet sich auch zur Herstellung von Bauwerks- und Dachanschlüssen. Dabei wird anstatt des Abrollwagens 20 eine kleine Vorrichtung, insbesondere ein Handgerät, verwendet.

## Patentansprüche

1. Verfahren zum Verschweißen flächiger Bauwerksabdichtungen, wobei die zu verschweißenden Flächen einer zu einer Rolle (18) aufgerollten Abdichtungsbahn und einer Abdichtungsbahn einer Unterschicht (10) durch Aufheizen mit Infrarotstrahlen erhitzt bzw. erweicht und durch anschließendes Zusammendrücken verschweißt werden, wobei die beiden zu verschweißenden Flächen der Abdichtungsbahnen gleichzeitig und vollflächig von mindestens einem Infrarotstrahler (27) durchgehend über die gesamte Breite der auf der Rolle (18) aufgerollten Abdichtungsbahn aufgeheizt bzw. erweicht werden, **dadurch gekennzeichnet, dass** die zu verschweißenden Flächen mit kurzwelligen Infrarotstrahlen kontinuierlich erhitzt bzw. erweicht werden.

2. Verfahren nach Anspruch 1, **dadurch gekennzeichnet, dass** die zu verschweißende Fläche einer zu einer Rolle (18) aufgerollten Abdichtungsbahn während des Abrollens der Abdichtungsbahn von der Rolle (18) kontinuierlich aufgeheizt bzw. erweicht wird.

3. Verfahren nach Anspruch 1 oder 2, **dadurch gekennzeichnet, dass** die zu verschweißenden Flächen durch wenigstens einen Infrarotstrahler (27) aufgeheizt werden, wobei dieser mindestens eine Infrarotstrahler (27) beim Abrollen der Rolle (18) der Abdichtungsbahn mit vorzugsweise gleich bleibendem Abstand vor der Rolle (18) entlanggeführt wird, insbesondere die Rolle (18) und der mindestens eine Infrarotstrahler (27) gemeinsam weiterbewegt werden.

4. Verfahren nach einem der vorhergehenden Ansprüche, **dadurch gekennzeichnet, dass** die maximale Solltemperatur, auf die mindestens eine der zu verschweißenden Flächen aufgeheizt wird, während des Aufheizens der Fläche überwacht wird, insbesondere beim Aufheizen der mindestens einen zu verschweißenden Flächen die Oberflächentemperatur mindestens einer der aufzuheizenden Flächen kontinuierlich ermittelt und mit der Solltemperatur verglichen wird.

## Claims

1. Method for welding together areal built-structure waterproofing systems, wherein the surfaces to be welded of a waterproofing membrane, which is rolled up to form a roll (18), and of a waterproofing membrane of an underlayment layer (10) are heated or softened by heating with infrared beams and they are welded together by subsequent pressing together, wherein the two surfaces to be welded of the waterproofing membranes are heated or softened simultaneously and over their entire surfaces by at least one infrared emitter (27) continuously across the entire width of the waterproofing membrane that is rolled up on the roll (18), **characterized in that** the surfaces to be welded are heated or softened continuously using short-wave infrared beams.

2. Method according to Claim 1, **characterized in that** the surface to be welded of a waterproofing membrane, which is rolled up to form a roll (18), is heated or softened continuously while the waterproofing membrane is unrolled from the roll (18).

3. Method according to Claim 1 or 2, **characterized in that** the surfaces to be welded are heated by at least one infrared emitter (27), wherein this at least one infrared emitter (27) is guided along the waterproofing membrane preferably at a constant distance in front of the roll (18) while the roll (18) is being unrolled, in particular the roll (18) and the at least one infrared emitter (27) are moved along together.

4. Method according to one of the preceding Claims, **characterized in that** the maximum setpoint temperature, to which at least one of the surfaces to be welded is heated, is monitored during the heating of the surface, in particular during heating of at least one of the surfaces to be welded the surface temperature of at least one of the surfaces to be heated is continuously ascertained and compared to the setpoint temperature.

## Revendications

1. Procédé de soudage de joints de construction plats, dans lequel les surfaces à souder d'une bande de joint enroulée en rouleau (18) et d'une bande de joint d'une sous-couche (10) sont chauffées ou ramollies par chauffage par rayonnement infrarouge puis sont soudées par assemblage par compression subséquent, les deux surfaces à souder des bandes de joint étant chauffées ou ramollies simultanément et sur toute leur surface par au moins un dispositif de rayonnement infrarouge (27) en continu sur toute la largeur de la bande de joint enroulée en rouleau (18), **caractérisé en ce que** les surfaces à souder sont chauffées ou ramollies en continu par rayonnement infrarouge à ondes courtes.

2. Procédé selon la revendication 1, **caractérisé en ce que** la surface à souder d'une bande de joint enroulée en rouleau (18) est chauffée ou ramollie en continu pendant le déroulement de la bande de joint du rouleau (18).

3. Procédé selon la revendication 1 ou 2, **caractérisé en ce que** les surfaces à souder sont chauffées par au moins un dispositif de rayonnement infrarouge (27), cet au moins un dispositif de rayonnement infrarouge (27) étant guidé lors du déroulement du rouleau (18) de la bande de joint à une distance de préférence constante devant le rouleau (18), en particulier le rouleau (18) et l'au moins un dispositif de rayonnement infrarouge (27) continuant d'être déplacés ensemble.

4. Procédé selon l'une quelconque des revendications précédentes, **caractérisé en ce que** la température de consigne maximale à laquelle au moins l'une des surfaces à souder est chauffée, est contrôlée pendant le chauffage de la surface, et notamment lors du chauffage de l'au moins une des surfaces à souder, la température de surface d'au moins l'une des surfaces à chauffer est déterminée en continu et est comparée avec la température de consigne.
